# EUROPEAN PATENT APPLICATION

(11) **EP 1 280 319 A2**
(43) Date of publication of application: **29.01.2003**
(21) Application number: 02254743.4
(22) Date of filing: 08.07.2002
(51) Int. Cl.: H04M 1/02, H04M 1/23, H04M 1/247

(54) **Buttonless communication device with touchscreen display**

(30) Priority: 25.07.2001 US 915414
(71) Applicant: Hewlett-Packard Company, Palo Alto, CA 94304 (US)
(72) Inventor: Gupta, Aloke, Corvallis, OR 97330 (US)
(74) Representative: Jackson, Richard Eric

(57) **Abstract**

A buttonless communication device that uses a touchscreen display (201) for entering and displaying data. The different modes of the device are displayed as icons (205) on the display allowing the device to enter the mode enabled by contact of the appropriate icon. A telephone mode displays a keypad of icon numbers (205), a send icon (207), an end icon (210), and an entered telephone number display area (215). By contact with the appropriate icons, a telephone number can be called or an incoming call answered.

## Description

### TECHNICAL FIELD

The present invention relates generally to communications. More particularly, the present invention relates to telephone handsets.

### BACKGROUND OF THE INVENTION

The functions of personal digital assistants and cellular telephones are merging. Devices are emerging that not only can hold addresses and phone numbers but can also communicate over the Internet through a wireless connection. This gives the user the ability to send e-mail, download stock quotes, look-up directions for travel as well as make telephone calls.

Many cellular telephone manufacturers enable the personal digital assistant and cellular telephone capability by providing a larger display on the telephone. The larger display is able to show multiple lines of information as well as icons for accessing the personal digital assistant functions of the device.

In order to keep the telephone small and still provide a reasonably large display for information, the size of the keypads for entering data has been reduced substantially. Individuals with large fingers or users that try to input data while moving may have trouble depressing the small keys properly. There is a resulting unforeseen need for a small communications device that merges the functions of a personal digital assistant and a telephone, cellular or otherwise, while still providing a display that is large enough for practical information viewing and a keypad that is easy to use.

### SUMMARY OF THE INVENTION

The present invention encompasses a communications device that transmits and receives communication signals. In the preferred embodiment, the communications device is a wireless radiotelephone for operation in a cellular system.

The radiotelephone comprises a transmitter that converts electrical representations of sound signals into communication signals for transmission over a medium. A receiver receives communication signals that are converted into received electrical representations of sound signals.

A touch-screen display is comprised of icons that represent numbers. The icons are used to enter a number in response to a contact, on the display, over a particular icon to be entered. A controller controls the transmitter, the receiver, and the touch-screen display. The controller controls the operation of the communications device and comprises an apparatus that generates the icons representing numbers for display on the touch-screen display. The controller also comprises an apparatus that generates an accumulated telephone number in response to the particular icons contacted on the touch-screen display.

### BRIEF DESCRIPTION OF THE DRAWINGS

FIG. 1 shows a typical cellular telephone with keypad.
FIG. 2 shows a buttonless, wireless communication device of the present invention in a telephone mode.
FIG. 3 shows the mode selection icons of the present invention.
FIG. 4 shows a wireless headset coupled to the communication device of the present invention.
FIG. 5 shows a block diagram of the communication device of the present invention.
FIG. 6 shows a flowchart of a communication device process of the present invention.
FIG. 7 shows a flowchart of a received call process for the communication device of the present invention.
FIG. 8 shows a tactile response display screen of the present invention.
FIG. 9 shows a block diagram of the communications device in accordance with the embodiment of FIG. 4.

### DETAILED DESCRIPTION OF THE PREFERRED EMBODIMENT

The communication device of the present invention provides a telephone with a full length, tactile response, touchscreen display. Instead of portions of the telephone being taken up by a fixed keypad, the touchscreen display can display a keypad while in the telephone dialing mode but then replace the keypad with extra display space for data. The display also features dynamically raised keys and buttons in response to what is being displayed.

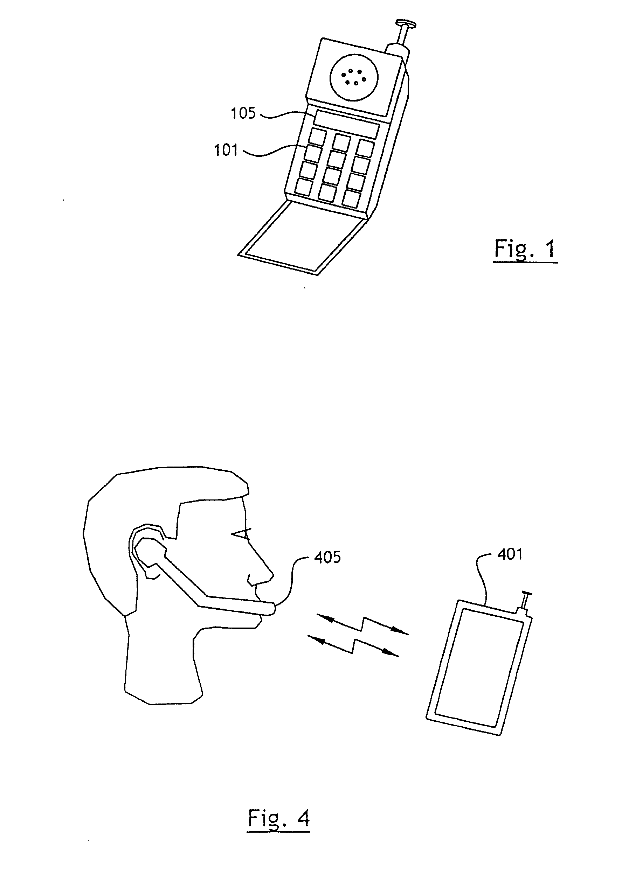

FIG. 1 illustrates a typical radiotelephone using a fixed keypad (101). The small display (105) is very limited in the amount of information that it can display. The keypad (101) cannot be moved or removed to enlarge the display in any way.

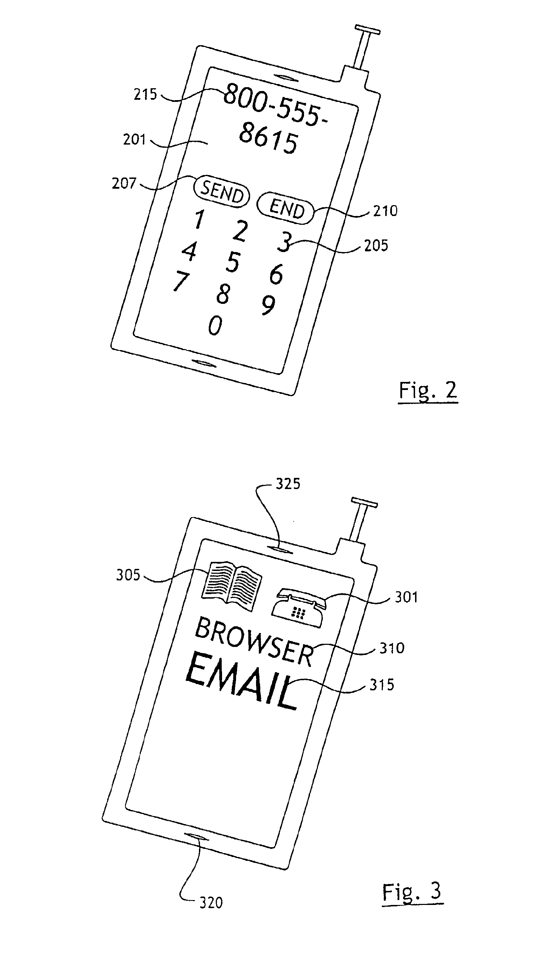

FIG. 2 illustrates the buttonless communication device of the present invention. In the preferred embodiment, this communication device is a wireless radiotelephone for use in a cellular system. Alternate embodiments use other types of telephones such as cordless telephones, for use in the home, that are coupled to the public switched telephone system. The cellular radiotelephone of the present invention is not constrained to any one air-interface standard. It works equally well with code division multiple access (CDMA), global system for mobile communication (GSM), time division multiple access (TDMA), or even advanced mobile phone system (AMPS).

The telephone illustrated in FIG. 2 is comprised of a large touchscreen display (201). FIG. 2 illustrates the present invention in the telephone mode. In this mode, the device displays number icons (205) or other informational symbols (not shown) which form and are used as a telephone keypad for entering telephone numbers. The display also displays a "SEND" key (207) and an "END" key (2 10) (for purposes of this disclosure, the term 'key" does not refer to a physical button or switch but instead refers to an area of the display screen which when contacted or touched causes the generation of a signal to the phone that is representative of the "button" or "pad" that was actuated. The functions of a "SEND" and "END" key are generally known to start and stop a wireless phone call. A portion of the display (215) is reserved for displaying the telephone number as it is being typed in.

In most cases, the user inputs a telephone number, as well as the "*" and "#" keys by touching the touchscreen over the number or symbol desired. This number (or symbol) is then added to the telephone number at the top of the screen (215). Once the entire telephone number has been entered, the user touches the screen over the send key (207) to transmit the number to the systems switch for dialing. For purposes of claim construction, the term "number" should be construed as including the numerals zero through nine as well as the "*" and "#" keys but also including possibly any other alphanumeric symbol.

In the preferred embodiment, the user receives an aural feedback whenever a "key" is contacted. Since the surface of the screen of the preferred embodiment is smooth and there is no key movement to let the user know that data has been entered, the telephone can be set up to generate an electronic beep, clicking noise, or some other sound to indicate the successful actuation of each "key". The chosen sound may be chosen by setting up user preferences of the telephone operator or the sound may be turned off for silent operation.

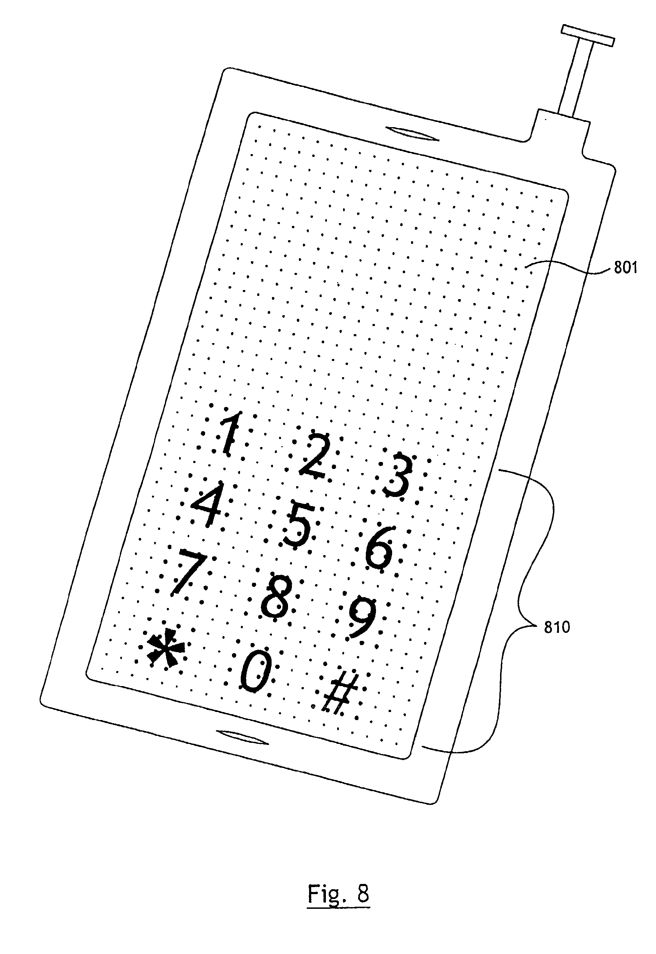

The touchscreen display, in the preferred embodiment, is responsive to a touch sensor that detects mechanical pressure from a users finger on a particular portion of the screen. The touch sensor may be a film behind a flexible tactile transducer film or a thin film in front of tactile elements (discussed subsequently in FIG. 8), with sufficient flexibility and compliance that it does not impair the tactile perception of the screen.

The touch sensor may also be a film layer of the tactile surface itself, or may include touch sensitive elements interspersed adjacent to the tactile dot elements so that neither the touch sensor nor the tactile display elements overlay the other. Other touch screens embodiments use grids of interruptible light beams, capacitive discharge sensors, and conductive grids sensing a circuit made across nearby nodes, all of which are considered herein to be structures (circuits and components) equivalent to each other.

The telephone of the present invention is capable of multiple operating modes to take advantage of the large touchscreen display. FIG. 3 illustrates an example of some of these modes. In order to enter the telephone mode and display the embodiment illustrated in FIG. 2, the user touches the telephone mode icon (301). An address/telephone book icon (305) takes the user to listings of stored telephone numbers and addresses. By touching a desired telephone number, the telephone of the present invention will automatically go to the telephone mode and dial that number.

The display also has a browser icon (3 10) that takes the user to the browser program used by the telephone. The browser is a scaled down version of a personal computer browser such as NETSCAPE NAVIGATOR and, in the preferred embodiment, conforms to the wireless access protocol (WAR) standard for wireless Internet access. This browser program enables the user to access selected Web sites over the Internet and display the accessed data on the large telephone display. It can be seen the that lack of a fixed telephone keypad enables substantially more data to be displayed while in this mode than would be possible with the fixed keypad.

In another embodiment, another method for the present invention to display information is using NTT Do-Co-Mo's I-mode. This mode is well known in the art and is not discussed further.

Also illustrated in FIG. 3 is the email icon (3 15) for accessing the email program of the telephone of the present invention. By touching the screen over this icon, the telephone runs the email program that allows the user to enter and send emails using the wireless telephone.

In one embodiment, the telephone of the present invention has a built-in speaker (325) to enable the user to hear telephone conversations. The telephone in this embodiment also has a microphone (320) built in to the telephone to enable the user to speak to the other parties on the telephone conversation.

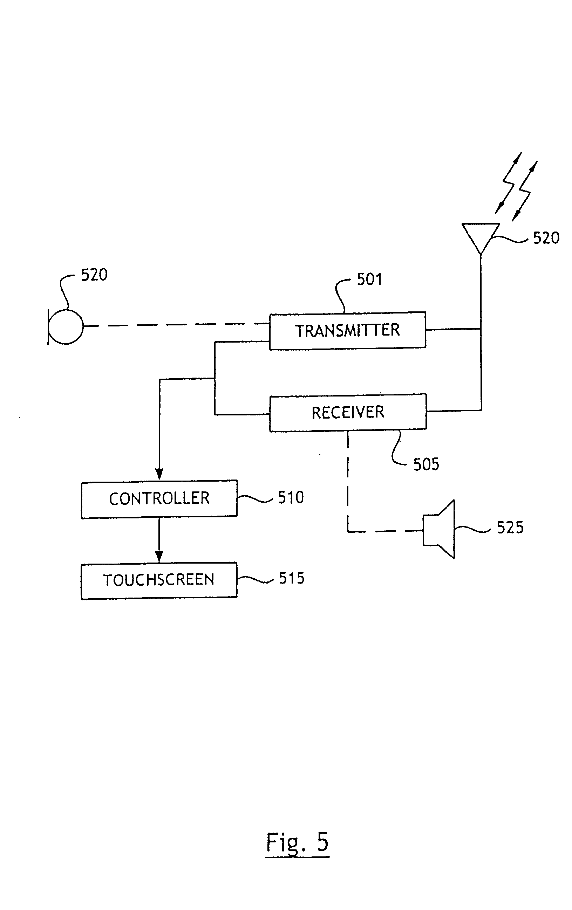

FIG. 4 illustrates an alternate embodiment of the present invention that uses a wireless headset (405) to communicate with the telephone (401) of the present invention. In order to reduce the size and weight of the telephone (401) and also to give more room for the display, this embodiment does not have a built-in speaker and microphone. Instead, the wireless headset (405) performs the same task as a built-in speaker and microphone.

An example of such a wireless headset embodiment is the Bluetooth standard being developed by cellular telephone manufacturers. The Bluetooth standard uses a low power (1 mW) transmitter in the headset (405) and telephone (401) that enables them to communicate back and forth without wires. The information communicated between the headset (405) and the telephone (401) operates at 2.4 GHz, a data rate of up to 720 kb/s, and can reach distances of 10 meters.

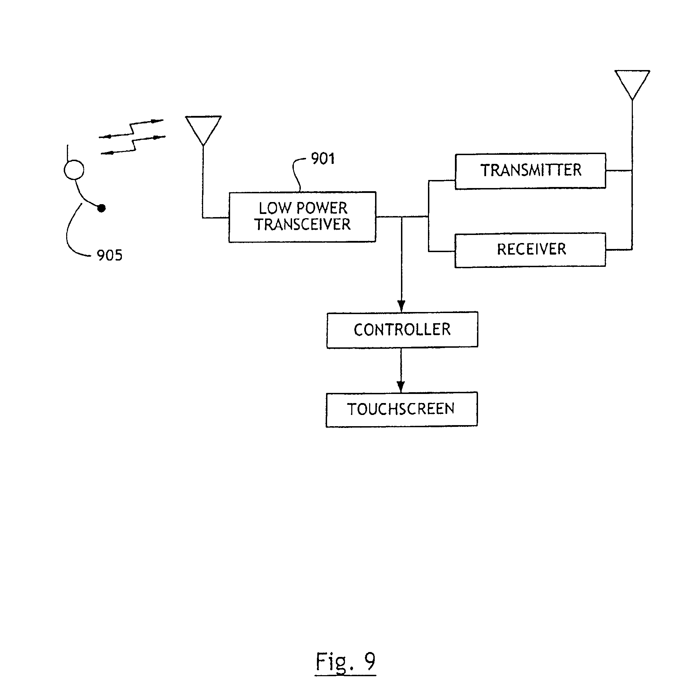

FIG. 9 illustrates a block diagram of the embodiment of FIG. 4. The unit includes the low-power transceiver (901) that communicates with the headset (905).

This type of headset allows the user to better use the display while talking on the telephone. For example, if the party on the other end of the conversation asks to set up a meeting with the telephone user, the telephone user can access and view his datebook in the device while still carrying on the conversation.

FIG. 5 illustrates a block diagram of the preferred embodiment of the present invention. The telephone is comprised of a transmitter (501) and receiver (505) that are coupled to an antenna (520). The antenna (520) receives the radiotelephone signals from the base station for the receiver (505) to demodulate into speech signals. The antenna (520) also transmits modulated signals from the transmitter (501) to the base station.

The telephone is controlled by a controller (5 10) that is coupled to the transmitter (501), receiver (505), and the touchscreen display (5 15) of the present invention. The controller (5 10), in the preferred embodiment, is a microcontroller that uses microcode. Alternate embodiments use other types of controllers such as microprocessors, application specific integrated circuits (ASIC), or other such controllers.

If the embodiment includes a microphone (520), it would be coupled to the transmitter (501) for modulation of the speech signal for transmission. Similarly, if the embodiment incorporated a speaker (525), it would be coupled to the receiver (505) for changing the demodulated signal received from the base station into an aural signal to be radiated by the speaker (525).

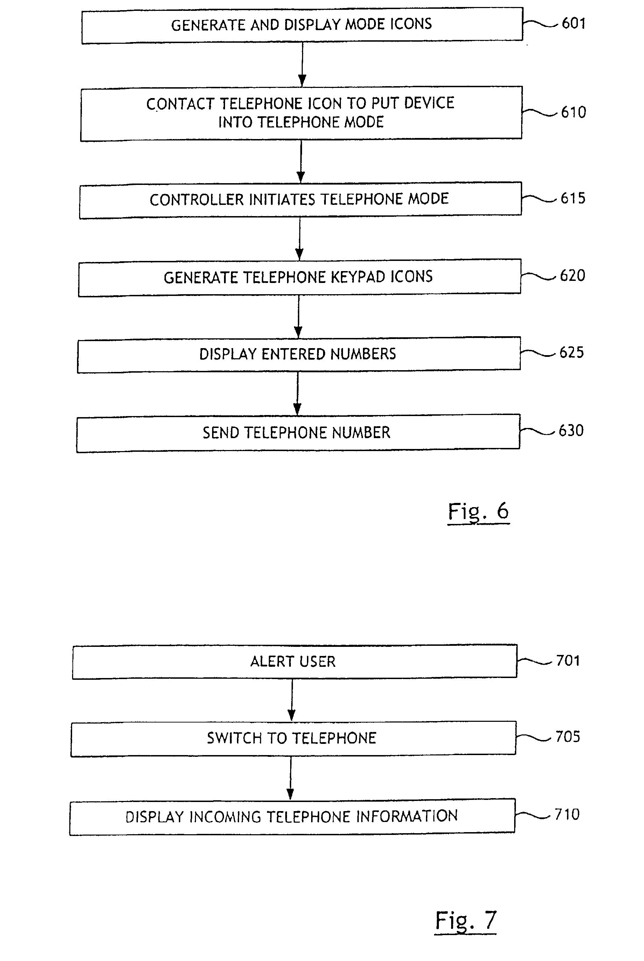

The process of the present invention is illustrated in FIG. 6. This process begins with the controller generating the icons indicating the different modes of the communication device (step 60 1). The controller then displays these icons on the touchscreen display. The user touches the telephone icon to put the communication device into the telephone mode (step 610). The controller reads the contact on the touchscreen display and, knowing the coordinates of the telephone mode icon on the display, puts the device into the telephone mode (step 615). Once in the telephone mode, the controller generates the number icons and causes the touchscreen display to display them in a keypad-style format (step 620). The controller also generates the other telephone keys, such as "send", "end", and the telephone number display and displays them in the proper format on the touchscreen display.

When the user contacts the touchscreen over the appropriate number to generate the desired telephone number, the controller reads these contacts and displays those numbers in the telephone display section of the touchscreen display (step 625). The user then contacts the "SEND" icon to instruct the controller to transmit the telephone number to the central switch for dialing (step 630).

FIG. 7 illustrates a received call process of the present invention. If the communication device receives a call, the device alerts the user by vibrating, flashing the display, or generating an alert tone (step 701). In the preferred embodiment, the communication device automatically changes to the telephone mode (step 705) and displays any information received regarding the incoming call (710). This information includes the calling telephone number and calling party name.

FIG. 8 illustrates a tactile touchscreen as used on the communication device of the present invention. The screen is capable of providing raised keys for the telephone numbers or other icons. Using this type of screen, the user has a tactile feedback, similar to depressing a telephone keypad button, when operating the communications device. The tactile touchscreen also provides assistance to visually impaired people by having the capability to display the Braille character set.

As illustrated in FIG. 8, the display is comprised of a matrix of individually addressable dot or tactile elements. The elements are arranged in an evenly spaced grid covering the entire display. In an alternate embodiment, the tactile portion of the display is only on part of the display, such as the lower half, in order to provide a 'telephone keypad" area when in that particular mode. In the preferred embodiment, the elements are spaced less than 0.10 inch apart in order to allow the sensation of a continuous line.

Each tactile element is switchable between an inactive position in which the dot is flush with the surrounding surface and an active position in which the dot is raised above the surrounding surface. The mechanism to provide this may be of any type including: electro-mechanical, electromagnetic, and switchable dimpled plastic film. In the preferred embodiment, the tactile display is transparent in order to permit the conventional liquid crystal display to be seen below the raised surface.

In one embodiment, the tactile display uses a clear fluid that can be pumped to each element by x/y coordinate addressing by the communications device controller. The controller switches the appropriate valves along the x and y axes in order to allow fluid to flow to a certain element or elements. This has the effect of raising that element or elements.

Another embodiment uses a clear material that warps when a predetermined voltage is applied to the element. Again using the x/y coordinate addressing, the controller applies the predetermined voltage to the particular element or elements that are desired to be raised. The memory effect of the material causes it to return to its flat state when the voltage is removed.

These described methods for raising the elements on the tactile display are for illustration purposes only. Any other method for raising the individual elements is encompassed by the present invention.

In operation, referring to FIG. 8, when the controller detects that the communications device is in the telephone mode, it raises the tactile elements in the appropriate positions on the display in order to simulate buttons on a telephone keypad (8 10). Additionally, the icon for each key is generated and displayed behind each tactile element-by way of a darkened (or lightened) area simulating a key on the liquid crystal display.

The controller also raises the appropriate elements for other such displays. For example, if a multimedia display is being presented, the controller can raise the appropriate elements to form fast forward, reverse, and other types of keys. The controller can also shape the screen to produce maps.

The tacstile display of the present invention also has the added benefit of providing vision-impaired individuals with Braille elements so as to allow the visually-impaired user to operate the communications device. For example, the controller can raise the Braille equivalent of the numbers on a telephone in order for the impaired user to input a telephone number. The controller can also use the Braille elements in order to display directions to a location that the user desires to find.

The size of the touchscreen display of the present invention provides the communication device with the ability to display multimedia deliveries from the Internet or other sources. The display could show the presentation along with dynamically changing control buttons such as fast forward, back, review, stop, and pause.

The present invention also has the ability to display local maps and the present position of the communications device. Using either a built-in GPS receiver or the cell-phone network's locator capability, the map can display present position and directions on going to another location. Additional maps can be downloaded from the Internet.

In summary, the present invention provides a communication device having a full-length touchscreen display. This enables the display of additional data and information not possible on communication devices having a fixed keypad.

Numerous modifications and variations of the present invention are possible in light of the above teachings. It is therefore to be understood that within the scope of the appended claims, the invention may be practiced otherwise than as specifically described herein.

## Claims

1. A communications device that transmits and receives communication signals, the communications device **characterized by**:
a tactile response, touch-screen display (801) comprising dynamically activated tactile elements; and
a controller (510), coupled to the tactile response, touch-screen display, the controller controlling operation of the communications device including dynamically activating the tactile elements, the controller comprising means to generate icons representing data for display on the touch-screen display.

2. The communications device of claim 1 and further **characterized by**:
a transmitter (501) that converts electrical representations of aural signals into communication signals for transmission over a medium; and
a receiver (505) that receives communication signals for conversion into received electrical representations of aural signals.

3. The communications device of claim 1 wherein the tactile response, touchscreen display is **characterized by** a matrix of substantially closely spaced tactile element.

4. The communications device of claim 3 wherein the tactile elements are activated by electrically addressing a desired tactile element.

5. The communications device of claim 3 wherein the tactile elements are activated by addressing a desired tactile element utilizing a fluid controlled by the controller.

6. The communications device of claim 1 wherein the controller has means for forming a numeric keypad by activating a plurality of the tactile elements situated over number icons generated on the touchscreen display.

7. A method for communication by a buttonless communications device comprising a tactile element, touchscreen display, the method **characterized by** the steps of:
generating a plurality of data icons on the touchscreen display (step 601);
activating a sufficient quantity of tactile elements over each of the plurality of data icons to provide a tactile response to touching a data icon (step 620); and further **characterized by**
generating a telephone number in response to which particular data icons are selected by contact with the touchscreen display (step 630).

8. The method of claim 7 and further **characterized by** the step of displaying the telephone number generated by the selection of particular data icons.

9. The method of claim 7 and further **characterized by** the step of transmitting the telephone number to a central switch in order to call the telephone number.
